(19) Europäisches Patentamt
European Patent Office
Office européen des brevets

(11) **EP 1 043 843 B1**

(12) **FASCICULE DE BREVET EUROPEEN**

(45) Date de publication et mention
de la délivrance du brevet:
**06.03.2013 Bulletin 2013/10**

(51) Int Cl.:
***H04B 5/00*** *(2006.01)*

(21) Numéro de dépôt: **00400905.6**

(22) Date de dépôt: **03.04.2000**

(54) **Récepteur de signaux portable à plusieurs antennes**

Tragbarer Signalempfänger mit mehreren Antennen

Portable signal receiver with several antennas

(84) Etats contractants désignés:
**DE ES GB IT**

(30) Priorité: **07.04.1999 FR 9904326**

(43) Date de publication de la demande:
**11.10.2000 Bulletin 2000/41**

(73) Titulaire: **Valeo Sécurité Habitacle**
**94046 Créteil Cedex (FR)**

(72) Inventeur: **Avenel, Jean-Jacques**
**94430 Chenevieres (FR)**

(74) Mandataire: **Jacquot, Ludovic R. G. et al**
**Valeo Sécurité Habitacle**
**Service Propriété Industrielle**
**76 Rue Auguste Perret**
**ZI Europarc**
**94046 Créteil Cedex (FR)**

(56) Documents cités:
**WO-A-98/07244      WO-A-98/20626**
**FR-A- 2 763 186**

## Description

La présente invention concerne un récepteur portable du type comprenant plusieurs antennes reliées à une unité réceptrice pour recevoir un signal transmis par induction électromagnétique, lesdites antennes étant réalisées sous la forme de bobines qui sont portées par un support de telle façon que les spires respectives desdites bobines soient orientées suivant des axes respectifs différents d'un système d'axes de référence lié audit support.

Les récepteurs portables du genre indiqué ci-dessus sont utilisables notamment dans un système antivol pour véhicule automobile. Dans ce cas, le récepteur de signaux est habituellement incorporé dans ce que l'on appelle un "identifiant", qui est destiné à être porté par le propriétaire du véhicule ou par une personne autorisée et qui peut comporter, en outre, un émetteur de signaux disposé sur le même support que le récepteur de signaux. Ce support peut, par exemple, être réalisé sous la forme d'une carte à puce ou sous la forme d'une carte incorporée dans un badge, dans la tête de la clé de contact d'un véhicule automobile ou dans d'autres articles susceptibles d'être portés par le propriétaire du véhicule automobile ou une personne autorisée à conduire le véhicule. Ainsi, des signaux peuvent aussi bien être reçus par l'identifiant en provenance d'une unité d'identification faisant partie du système antivol et située à bord du véhicule, qu'être émis par l'identifiant à destination de ladite unité d'identification.

Dans ces conditions, lorsqu'un conducteur souhaite entrer dans son véhicule, un dialogue s'établit de façon connue entre l'unité d'identification et l'identifiant. Si l'unité d'identification détecte de façon connue la présence d'un identifiant correct, par exemple en comparant un code émis par l'identifiant à un code de référence préenregistré dans une mémoire du système antivol, l'unité d'identification émet, en cas d'identité des deux codes, un signal d'autorisation qui peut être utilisé pour autoriser ou commander une ou plusieurs fonctions du véhicule automobile, par exemple pour commander la décondamnation des serrures des portières du véhicule automobile et/ou pour libérer un système anti-démarrage.

On connaît bien aujourd'hui le problème posé par l'homogénéité de la réception des signaux par un identifiant placé dans le champ magnétique émis par l'antenne de l'émetteur-récepteur de l'unité d'identification située à bord du véhicule. Autrement dit, le signal reçu par le récepteur de l'identifiant doit avoir une amplitude aussi grande et constante que possible quelle que soit la position et/ou orientation de l'identifiant dans l'espace correspondant à la portée utile de l'émetteur de ladite unité d'identification.

On connaît dans l'état de la technique le document WO 1207244. Pour résoudre ce problème, une première solution connue consiste à engendrer ce que l'on appelle un "champ tournant" du côté émission, c'est-à-dire du côté de l'unité d'identification située à bord du véhicule. A cet effet, on utilise, à titre d'antenne, deux bobines dont les axes de révolution et les courants qui parcourent lesdites bobines sont décalés de 90°. Cela est relativement facile à réaliser si la modulation utilisée pour la transmission des données numériques est de type OOK (modulation en tout ou rien). Mais, si la modulation est de type FSK (modulation par déplacement de fréquence) ou PSK (modulation par déplacement de phase), il est nécessaire de maintenir constante la phase entre les deux courants parcourant respectivement les bobines. Ceci implique l'utilisation de circuits R, L, C quasiment identiques pour que, pendant les transitoires (changements de la valeur des données), les phases restent cohérentes. Ceci est difficile à réaliser surtout en série sur de gros volumes.

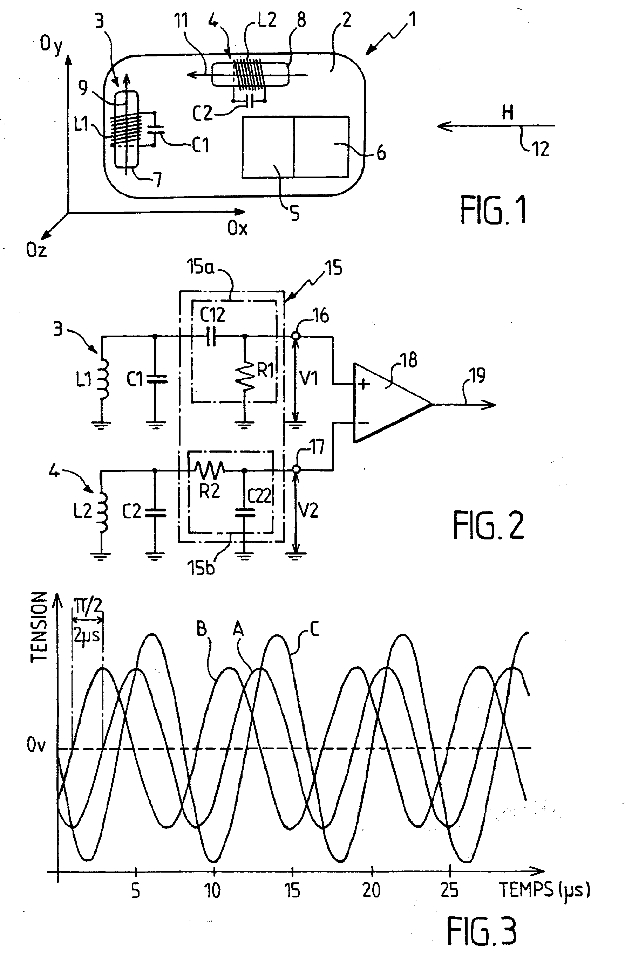

Il est aussi possible de réaliser un "champ tournant" du côté réception, c'est-à-dire du côté du récepteur de l'identifiant, en réalisant par exemple ce dernier comme cela est montré schématiquement sur la figure 1 des dessins annexés. La figure 1 montre un identifiant 1 réalisé par exemple sous la forme d'une carte 2 (support), qui peut avoir le format d'une carte à puce et qui porte deux antennes 3 et 4, une unité réceptrice 5 et, éventuellement, une unité émettrice 6 qui peut être aussi prévue sur la carte 2. Chacune des deux antennes 3 et 4 est réalisée sous la forme d'une bobine L1 ou L2 qui est, de préférence, bobinée sur un noyau 7 ou 8, de préférence en ferrite, et qui est reliée électriquement à l'unité réceptrice 5 et, le cas échéant, à l'unité émettrice 6 si elle est prévue. Les spires des deux bobines L1 et L2 ou, plus précisément, les normales aux surfaces des spires des deux bobines L1 et L2, sont orientées respectivement suivant des axes 9 et 11 qui sont perpendiculaires l'un à l'autre et situés dans le plan de la carte 2. Les deux antennes 3 et 4 peuvent être des antennes accordées sur la fréquence du signal à recevoir. Dans ce cas, des condensateurs C1 et C2 sont connectés en parallèle respectivement sur les bobines L1 et L2 pour former avec elles des circuits résonants parallèles R, L, C, R étant la résistance de la bobine L1 ou L2, L son inductance et C la capacité du condensateur C1 ou C2.

Dans ces conditions, lorsque la carte 2 se trouve dans un champ magnétique H variable dans le temps, par exemple un champ magnétique alternatif produit par l'antenne de l'émetteur-récepteur de l'unité d'identification située à bord d'un véhicule automobile, les deux circuits R, L, C de la carte 2 décrite ci-dessus constituent deux voies pour recevoir l'onde porteuse du signal émis par ladite unité d'identification et pour l'envoyer à l'unité réceptrice 5 de la carte 2. Le problème dans ce cas est le traitement électronique des deux voies. Les tensions ou forces électromotrices induites dans les deux bobines L1 et L2 peuvent, dans certaines positions de la carte 2 par rapport à la direction 12 du champ magnétique H, être en phase ou en opposition de phase. On ne peut donc pas faire une sommation directe des deux tensions par mise en série des deux circuits R, L, C, car il y a des cas où la tension résultante serait nulle.

En effet, si l'on suppose que la carte 2 se trouve dans le plan Ox, Oy d'un repère fixe orthonormé Ox, Oy, Oz, que la direction 12 du champ magnétique H est parallèle à l'axe Ox dudit repère orthonormé et que l'induction B est donnée par la formule

$$B = B_0 \sin \omega t \qquad (1)$$

dans laquelle $B_0$ est une constante qui dépend de l'intensité du champ magnétique H et de la perméabilité $\mu$ du milieu, en particulier la perméabilité du noyau 7 ou 8, et $\omega$ est la pulsation de l'onde porteuse du signal émis par l'unité d'identification, le flux magnétique $\varphi_1$ qui traverse la bobine L1 est, comme cela est bien connu, donné par la formule

$$\varphi_1 = B_0.S_1.\cos \alpha.\sin \omega t \qquad (2)$$

dans laquelle $S_1$ est la surface des spires de la bobine L1 et $\alpha$ est l'angle que fait l'axe 9 de la bobine L1 avec la direction 12 du champ H (la figure 1 représente une position particulière de la carte 2 dans laquelle l'angle a est ici égal à $\pi/2$). On sait également que la force électromotrice $e_1$ induite dans la bobine L1 est donnée par la formule

$$e_1 = \frac{d\varphi_1}{dt} = B_0.S_1.\omega.\cos \alpha.\cos \omega t \qquad (3)$$

De même, la force électromotrice $e_2$ induite dans la bobine L2, dont l'axe 11 fait un angle de $\pi/2$ par rapport à l'axe 9 de la bobine L1, est donnée par les deux formules suivantes

$$e_2 = \frac{d\varphi_2}{dt} = B_0.S_2.\omega.\cos \left(\frac{\pi}{2} - \alpha\right).\cos \omega t \qquad (4)$$

$$e_2 = B_0.S_2.\omega.\sin \alpha.\cos \omega t \qquad (5)$$

En supposant que les deux surfaces $S_1$ et $S_2$ sont égales et en posant

$$B_0.S_1.\omega = B_0.S_2.\omega = K \qquad (6)$$

on obtient alors pour $e_1$ et $e_2$ les formules suivantes

$$e_1 = K.\cos \alpha.\cos \omega t \qquad (7)$$

$$e_2 = K.\sin \alpha.\cos \omega t \qquad (8)$$

d'où il en résulte que

$$e_1 - e_2 = K (\cos \alpha - \sin \alpha) \cos \omega t \qquad (9)$$

On voit donc que si l'on fait tourner la carte 2 autour de l'axe Oz, il existe deux positions pour lesquelles la différence $e_1 - e_2$ s'annule à tout instant. Ces deux positions sont les positions dans lesquelles l'angle a est égal à $\pi/4$ ou $5\pi/4$, pour lesquelles la différence ($\cos \alpha - \sin \alpha$) est nulle. Pour ces deux positions de la carte 2 dans le plan Ox, Oy, aucun signal ne peut être reçu par l'unité réceptrice 5. Il en aurait été de même si, au lieu de faire la différence entre les tensions $e_1$ et $e_2$, on avait fait leur somme, excepté que, dans ce cas, les deux positions pour lesquelles la somme est nulle correspondent à des valeurs de $\alpha$ égales à $3\pi/4$ et $7\pi/4$.

De même, si la carte 2 se trouve dans le plan Ox, Oz, et si l'on fait tourner la carte autour de l'axe Oy, il existe, là encore, deux positions de la carte 2 pour lesquelles la somme ou la différence des tensions $e_1$ et $e_2$ s'annule. Enfin, si la carte 2 se trouve dans le plan Oy, Oz, les tensions $e_1$ et $e_2$ sont toutes les deux nulles et, dans ce cas, aucun signal ne peut être reçu par l'unité réceptrice 5 quelle que soit la position de la carte 2 dans le plan Oy, Oz ou dans un plan parallèle à ce plan.

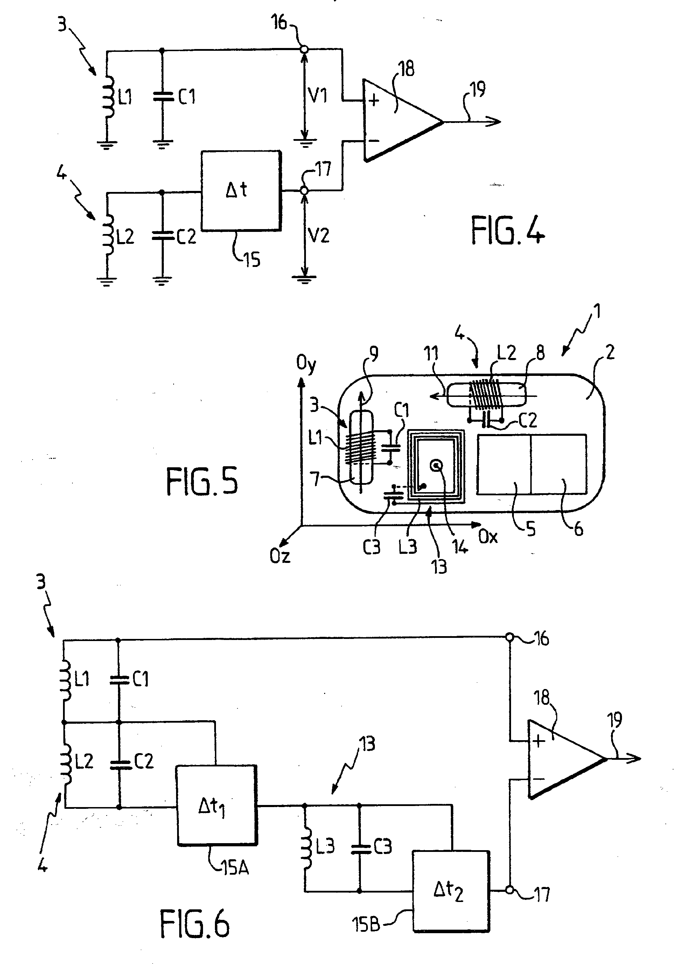

Le document FR-A-2 763 186 décrit un récepteur de signaux portables, dans lequel les inconvénients susmentionnés peuvent être évités au moins dans certains cas. Dans ce document, le récepteur de signaux est réalisé sous la forme d'une carte semblable à celle représentée schématiquement sur la figure 5 des dessins annexés. Cette carte est elle-même semblable à celle déjà décrite en référence à la figure 1 et comprend, en outre, une troisième antenne 13, qui est par exemple réalisée sous la forme d'une bobine L3 à air, mais qui peut être aussi pourvue d'un noyau en ferrite si on le désire. Les spires de la bobine L3, ou la normale à leur surface, sont orientées dans une direction 14 perpendiculaire au plan de la carte 2. Comme le montre la figure 4 du document précité, un amplificateur est associé à chacune des trois antennes pour amplifier la tension induite dans la bobine de l'antenne correspondante et les tensions amplifiées fournies par les trois amplificateurs sont sommées dans un additionneur, dont la sortie est raccordée à l'unité réceptrice portée par la carte.

Dans ces conditions, en supposant que la carte 2 se trouve dans le plan Ox, Oy d'un trièdre orthonormé Ox, Oy, Oz, et que le champ magnétique engendré par l'antenne émettrice située à bord d'un véhicule automobile soit parallèle à l'axe Oz dudit trièdre orthonormé, les tensions induites dans les bobines L1 et L2 des deux antennes 3 et 4 seront nulles, tandis que la tension induite dans la bobine L3 de la troisième antenne 13 sera maximale. Il en serait bien sûr de même pour toute position de la carte 2 dans l'espace, dans laquelle son plan est perpendiculaire à la direction du champ magnétique engendré par ladite antenne émettrice. Un tel arrangement à trois antennes permet donc de résoudre l'un des problèmes de réception décrits plus haut à propos de la carte 2 à deux antennes représentée dans la figure 1.

Toutefois, lorsque la direction du champ magnétique engendré par l'antenne émettrice est parallèle au plan de la carte 2, la tension induite dans la troisième antenne 13 est nulle et, même dans le cas de cette carte à trois antennes, il existe des positions de la carte dans lesquelles la somme ou la différence des deux tensions induites dans les bobines L1 et L2 est nulle. Ainsi, il subsiste encore des positions de la carte 2 dans lesquelles toute réception de signaux par l'unité réceptrice de la carte est impossible. Cet inconvénient peut être évité dans un second mode de réalisation du récepteur portable décrit dans le document précité FR-A-2 763 186, dans lequel, à la place de l'additionneur précité, il est prévu un détecteur de maximum qui ne transmet à l'unité réceptrice que la plus grande des trois tensions induites dans les bobines des trois antennes.

Quoi qu'il en soit, avec les deux modes de réalisation décrits dans le document précité, les problèmes d'homogénéité de la réception ne sont résolus qu'au prix d'une complexité relativement grande du point de vue matériel (trois antennes, trois amplificateurs et un additionneur ou un détecteur de maximum). Cette solution connue est donc à la fois encombrante et coûteuse en termes de composants et surtout, elle augmente les courants de veille, de sorte qu'elle est également coûteuse en énergie électrique consommée.

La présente invention a donc pour but de fournir un récepteur portable du type défini en préambule, qui soit plus simple, moins coûteux et moins consommateur d'énergie que le récepteur portable connu.

Le récepteur portable selon l'invention est caractérisé par le fait qu'il comprend en outre, entre lesdites antennes et ladite unité réceptrice des moyens pour produire un déphasage temporel entre les signaux induits délivrés respectivement par lesdites antennes, ledit déphasage correspondant à un angle de $(n - 1)\,\pi/n$ à la fréquence du signal à recevoir, n étant le nombre des antennes.

Selon un mode de réalisation de l'invention, dans lequel il est prévu deux antennes dont les bobines ont leur spires respectives orientées à 90° les unes par rapport aux autres, une première des deux antennes est reliée à un premier circuit déphaseur qui déphase de +45° le signal induit délivré par la première antenne, tandis que la seconde antenne est reliée à un second circuit déphaseur qui déphase de -45° le signal induit délivré par la seconde antenne. Les deux circuits déphaseurs peuvent être constitués par de simples circuits R, C comme on le verra en détail plus loin. Dans ce mode de réalisation, si le champ magnétique engendré par l'antenne émettrice située à bord du véhicule automobile est parallèle au plan de la carte, les tensions V1 et V2 induites dans les bobines des deux antennes et respectivement déphasées de $+\pi/4$ et $-\pi/4$ peuvent être exprimées par les formules suivantes

$$V1 = K \cos \alpha \cos \left(\omega t + \frac{\pi}{4}\right) \qquad\qquad (10)$$

$$V2 = K \sin \alpha \cos (\omega t - \frac{\pi}{4}) = K \sin \alpha \sin (\omega t + \frac{\pi}{4}) \qquad (11)$$

d'où :

$$V1 - V2 = K [\cos \alpha \cos (\omega t + \frac{\pi}{4}) - \sin \alpha \sin (\omega t + \frac{\pi}{4})] \quad (12)$$

$$V1 - V2 = K \cos (\omega t + \frac{\pi}{4} + \alpha) \qquad (13)$$

D'après la formule (13), on voit donc que la différence des tensions V1 et V2 a un module constant K et est simplement déphasée de ($\pi$/4 + $\alpha$) par rapport au signal de pulsation $\omega$ ou de fréquence f ($\omega$ = 2$\pi$f) qui lui a donné naissance. Dans ces conditions, l'unité réceptrice pourra recevoir un signal quelle que soit la valeur de l'angle $\alpha$, c'est-à-dire quelle que soit la position de la carte dans tout plan parallèle à la direction du champ magnétique émis par l'antenne émettrice située à bord du véhicule automobile.

Dans un second mode de réalisation de la présente invention, dans lequel il est également prévu deux antennes, dont les bobines ont leurs spires respectives orientées à 90° les unes par rapport aux autres, une première des deux antennes peut être reliée électriquement directement à une première borne de sortie, tandis que la seconde antenne peut être reliée à une seconde borne de sortie à travers un circuit déphaseur qui déphase de 90° le signal induit délivré par la seconde antenne. Le circuit déphaseur peut être constitué par une ligne à retard dimensionnée pour introduire un retard de 1/4f, f étant la fréquence du signal à recevoir.

Dans ce cas, on peut montrer là encore que la différence des tensions V1 et V2 (V2 étant déphasée de +$\pi$/2 par rapport à V1) est donnée par la formule

$$V1 - V2 = K \cos(\omega t - \alpha) \qquad (14)$$

Là encore, on voit que la tension différentielle V1 - V2 a un module constant K quelle que soit la valeur de l'angle $\alpha$, donc quelle que soit l'orientation de la carte dans tout plan parallèle à la direction du champ magnétique émis par l'antenne émettrice.

Les premier et second modes de réalisation de l'invention décrits ci-dessus permettent de résoudre le problème de l'homogénéité de la réception dans le cas où le plan de la carte est parallèle à la direction du champ magnétique engendré par l'antenne émettrice située à bord du véhicule automobile. Toutefois, le problème n'est pas résolu lorsque le plan de la carte est perpendiculaire audit champ magnétique. Dans ce dernier cas, le problème peut être résolu de manière connue en soi en utilisant trois antennes dont les bobines ont leurs spires respectives orientées dans des directions qui sont deux à deux perpendiculaires l'une à l'autre. Dans ce cas, lesdits moyens de déphasage temporel peuvent être agencés pour produire un déphasage de 120° entre les trois signaux induits délivrés respectivement par les trois antennes. Lesdits moyens de déphasage peuvent comprendre des lignes à retard. En particulier, si l'une des antennes est reliée directement à une première borne de sortie et les deux autres antennes en cascade à une deuxième borne de sortie, il peut être prévu deux lignes à retard disposées respectivement entre la deuxième et la troisième antenne et entre la troisième antenne et la seconde borne de sortie, les deux lignes à retard étant dimensionnées pour introduire respectivement un retard de 1/3f et un retard de 2/3f, f étant la fréquence du signal à recevoir.

Dans les trois modes de réalisation du récepteur portable selon l'invention, les première et deuxième bornes de sortie précitées peuvent être reliées électriquement aux entrées d'un amplificateur différentiel, dont la sortie est reliée électriquement à ladite unité réceptrice.

D'autres caractéristiques et avantages de l'invention ressortiront au cours de la description qui va suivre, donnée en référence aux dessins annexés sur lesquels :

- la figure 1 est une vue de face montrant schématiquement un récepteur portable, à deux antennes, auquel la présente invention est applicable ;

- la figure 2 est un schéma électrique montrant un premier mode de réalisation de moyens déphaseurs utilisables avec le récepteur portable de la figure 1 ;
- la figure 3 est un graphique montrant des formes d'ondes apparaissant dans le circuit de la figure 2 ;
- la figure 4 est un schéma électrique montrant un deuxième mode de réalisation des moyens déphaseurs utilisables dans le récepteur portable de la figure 1 ;
- la figure 5 représente, de manière schématique, et en vue de face, un récepteur portable connu, à trois antennes, auquel l'invention peut être appliquée ;
- la figure 6 est un schéma électrique montrant un troisième mode de réalisation de l'invention dans le cas du récepteur portable à trois antennes montré dans la figure 5.

Le récepteur portable 1 représenté dans la figure 1 ayant déjà été décrit plus haut, il ne sera pas décrit à nouveau en détail. On notera simplement que pour résoudre le problème de l'homogénéité de la réception, des moyens déphaseurs 15 (figure 2) sont intercalés entre les deux antennes 3 et 4, d'une part, et l'unité réceptrice 5 (non montré dans la figure 2), d'autre part.

Dans le mode de réalisation de la figure 2, les moyens déphaseurs 15 comprennent deux circuits déphaseurs 15a et 15b, qui sont associés respectivement aux deux antennes 3 et 4 accordées sur la fréquence f du signal à recevoir. La sortie ou côté non à la masse de l'antenne accordée 3, qui est formée par la bobine L1 et par le condensateur C1, est connectée à l'une des armatures d'un condensateur C12 du circuit déphaseur 15a, dont l'autre armature est connectée, d'une part à une borne de sortie 16 et, d'autre part, à l'une des extrémités d'une résistance R1 dont l'autre extrémité est à la masse. D'un autre côté, la sortie de l'autre antenne accordée 4, qui est formée par la bobine L2 et par le condensateur C2, est connectée à l'une des extrémités d'une résistance R2 du second circuit déphaseur 15b, dont l'autre extrémité est connectée, d'une part, à une autre borne de sortie 17 et, d'autre part, à l'une des armatures d'un condensateur C22 dont l'autre armature est à la masse.

Si les filtres R1, C12 et R2, C22 ainsi réalisés ont leur fréquence de coupure égale à la fréquence centrale de l'antenne 3 ou 4, le premier déphaseur 15a produit un déphasage de +45° et le second déphaseur 15b produit un déphasage de -45°. Dans ces conditions, si la direction 12 du champ magnétique alternatif H engendré par une antenne située à bord d'un véhicule automobile est parallèle au plan de la carte 2, les tensions V1 et V2 qui sont respectivement disponibles sur les bornes de sortie 16 et 17 sont données respectivement par les formules (10) et (11) indiquées plus haut.

Les deux bornes de sortie 16 et 17 peuvent être par exemple connectées aux entrées d'un amplificateur différentiel 18 dont la sortie 19 peut être raccordée à l'unité réceptrice 5 portée par la carte 2 de la figure 1. Dans ce cas, la tension différentielle V1 - V2 disponible sur la sortie 19 est donnée par la formule (13) indiquée plus haut.

Les deux résistances R1 et R2, les deux condensateurs C12 et C22 et l'amplificateur différentiel 18 peuvent être facilement installés sur la carte 2 de la figure 1.

Dans la figure 3, les sinusoïdes A et B correspondent respectivement aux tensions V1 et V2, qui sont déphasées de $\pi/2$ l'une par rapport à l'autre, tandis que la sinusoïde C correspond à la tension différentielle V1 - V2.

La figure 4 montre un second mode de réalisation de l'invention, encore pour un récepteur portable 1 à deux antennes 3 et 4 comme celui représenté dans la figure 1. Dans la figure 4, les éléments qui sont identiques ou qui jouent le même rôle que dans le mode de réalisation de la figure 2 sont désignés par les mêmes numéros de référence et ne seront pas décrits à nouveau en détail.

Le mode de réalisation de la figure 4 diffère de celui de la figure 2 en ce que la sortie de l'antenne accordée 3 est connectée directement à la borne de sortie 16, tandis que la sortie de l'antenne accordée 4 est reliée à la borne de sortie 17 par l'intermédiaire d'une ligne à retard 15 qui est conçue pour introduire un retard $\Delta t$ de 1/4f, f étant la fréquence du signal à recevoir. Par exemple, si f = 125 kHz, $\Delta t$ = 2 $\mu$s. A la fréquence f, ce retard $\Delta t$ correspond à un déphasage de $\pi/2$ de la tension V2 par rapport à la tension V1. On obtient donc, dans ce cas, le même résultat qu'avec le mode de réalisation de la figure 2.

La ligne à retard 15 peut être réalisée de n'importe quelle façon connue, par exemple à l'aide de self-inductances et de capacités.

La figure 6 montre un troisième mode de réalisation de l'invention applicable à un récepteur portable 1 connu, comportant trois antennes 3, 4 et 13, comme celui montré dans la figure 5. Dans le mode de réalisation de la figure 6, les éléments qui sont identiques ou qui jouent le même rôle que ceux des modes de réalisation précédents sont désignés par les mêmes numéros de référence et ne seront pas décrits à nouveau en détail.

Dans le mode de réalisation de la figure 6, l'une des extrémités du circuit résonant parallèle formé par la bobine L1 et le condensateur C1 (antenne accordée 3) est connectée directement à la borne de sortie 16, tandis que l'autre extrémité de ce circuit résonant parallèle L1, C1 est connectée à l'une des extrémités du circuit résonant parallèle formé par la bobine L2 et par le condensateur C2 (antenne accordée 4). L'autre extrémité du circuit résonant parallèle L2, C2 est reliée électriquement, par l'intermédiaire d'une première ligne à retard 15A à l'une des extrémités d'un troisième circuit résonant parallèle formé par la bobine L3 et par le condensateur C3 (antenne accordée 13). L'autre extrémité de ce circuit résonant parallèle L3, C3 est reliée électriquement à la borne de sortie 17 par l'intermédiaire d'une seconde ligne à retard 15B.

Les deux lignes à retard 15A et 15B sont dimensionnées pour introduire respectivement un retard $\Delta t_1$ de 1/3f et un retard $\Delta t_2$ de 2/3f, f étant la fréquence du signal à recevoir. Dans le cas où la fréquence f est égale à 125 kHz, les retards $\Delta t_1$ et $\Delta t_2$ sont respectivement de 2,66 $\mu$s et 5,33 $\mu$s, ce qui correspond à des angles de déphasage de $2\pi/3$ (120°) et $4\pi/3$ (240°).

Dans ces conditions, la tension induite dans la bobine L2 et retardée par la ligne à retard 15A est déphasée de 120° par rapport à la tension induite dans la bobine L1. La tension induite dans la bobine L3 et retardée par la ligne à retard 15B est déphasée de 240° par rapport à la tension induite dans la bobine L1 et de 120° par rapport à la tension induite dans la bobine L2. La tension différentielle disponible entre les bornes 16 et 17 est la somme vectorielle des trois tensions induites respectivement dans les bobines L1, L2 et L3.

D'après ce qui précède, on voit que dans les divers modes de réalisation de l'invention qui ont été décrits ci-dessus, il est prévu, pour résoudre le problème de l'homogénéité de la réception, seulement un amplificateur différentiel et un ou deux circuits déphaseurs ou une ligne à retard dans le cas d'un récepteur à deux antennes, et seulement un amplificateur différentiel et deux lignes à retard dans le cas d'un récepteur à trois antennes, au lieu de trois amplificateurs et un additionneur ou trois amplificateurs et un circuit détecteur de maximum dans le cas du récepteur connu décrit dans le document FR-A-2 763 186.

Il va de soi que les modes de réalisation de l'invention qui ont été décrits ci-dessus ont été donnés à titre purement indicatif et nullement limitatif, et que de nombreuses modifications peuvent être facilement apportées par l'Homme de l'Art sans pour autant sortir du cadre de l'invention. C'est ainsi, notamment, que la carte 2 portant les deux antennes 3 et 4 ou les trois antennes 3, 4 et 13, l'unité réceptrice 5, l'unité émettrice 6 ainsi que les moyens déphaseurs 15 et l'amplificateur différentiel 18 n'a pas nécessairement le format d'une carte à puce ou carte de crédit, mais pourrait être constituée par tout autre support, de préférence plat, et ce support peut avoir des dimensions suffisamment petites pour être logé, par exemple, dans la tête d'une clé de contact permettant de commander le démarrage d'un véhicule automobile, dans un badge ou dans tout autre article destiné à être porté par le propriétaire du véhicule ou une personne autorisée.

**Revendications**

1. Récepteur portable comprenant plusieurs antennes (3, 4) reliées à une unité réceptrice (5) pour recevoir un signal transmis par induction électromagnétique, lesdites antennes étant réalisées sous la forme de bobines (L1, L2) qui sont portées par un support (2) de telle façon que les spires respectives desdites bobines soient orientées suivant des axes respectifs différents (9, 11) d'un système d'axes de référence lié audit support (2), ainsi que des moyens de déphasage (15) disposés entre lesdites antennes (3, 4) et ladite unité réceptrice (5), **caractérisé par le fait que** lesdits moyens de déphasage (15) sont agencés pour produire entre les signaux induits délivrés respectivement par lesdites antennes (3, 4) un déphasage temporel correspondant à un angle de $\dfrac{(n-1)\pi}{n}$ à la fréquence du signal à recevoir, n étant le nombre des antennes.

2. Récepteur selon la revendication 1, **caractérisé par le fait qu'**il comprend deux antennes (3, 4) dont les bobines (L1, L2) ont leurs spires respectives orientées à 90° les unes par rapport aux autres, et qu'une première (3) des deux antennes est reliée à un premier circuit déphaseur (15a) qui déphase de +45° le signal induit délivré par la première antenne (3), tandis que la seconde antenne (4) est reliée à un second circuit déphaseur (15b) qui déphase de -45° le signal induit délivré par la seconde antenne.

3. Récepteur selon la revendication 2, **caractérisé par le fait que** le premier circuit déphaseur (15a) comprend un premier condensateur (C12) dont une première armature est reliée électriquement à la sortie de la première antenne (3), et une première résistance (R1) dont les extrémités sont reliées électriquement respectivement à une seconde armature du premier condensateur (C12) et à la masse, la jonction entre la seconde armature du premier condensateur (C 12) et l'extrémité correspondante de la première résistance (R1) étant reliée à une première borne de sortie (16).

4. Récepteur selon la revendication 3, **caractérisé par le fait que** le second circuit déphaseur (15b) comprend une seconde résistance (R2) dont une première extrémité est reliée électriquement à la sortie de la seconde antenne (4), et un second condensateur (C22) dont les armatures sont reliées électriquement respectivement à une seconde extrémité de la seconde résistance (R2) et à la masse, la jonction entre la seconde extrémité de la seconde résistance (R2) et l'armature correspondante du second condensateur (C22) étant reliée à une seconde borne de sortie (17).

**5.** Récepteur selon la revendication 1, **caractérisé par le fait qu'**il comprend deux antennes (3, 4) dont les bobines (L1, L2) ont leurs spires respectives orientées à 90° les unes par rapport aux autres, et qu'une première (3) des deux antennes est reliée électriquement directement à une première borne de sortie (16), tandis que la seconde antenne (4) est reliée à une seconde borne de sortie (17) à travers un circuit déphaseur (15) qui déphase de 90° le signal induit délivré par la seconde antenne (4).

**6.** Récepteur selon la revendication 5, **caractérisé par le fait que** ledit circuit déphaseur (15) est une ligne à retard dimensionnée pour introduire un retard ($\Delta$t) de $\dfrac{1}{4f}$, f étant la fréquence du signal à recevoir.

**7.** Récepteur selon la revendication 1, **caractérisé par le fait qu'**il comprend trois antennes (3, 4, 13) dont les bobines (L1, L2, L3) ont leurs spires respectives orientées dans des directions (9, 11, 14) qui sont deux à deux perpendiculaires l'une à l'autre, et **par le fait que** lesdits moyens de déphasage temporel (15) produisent un déphasage de 120° entre les trois signaux induits délivrés respectivement par les trois antennes (3, 4, 13).

**8.** Récepteur selon la revendication 7, **caractérisé par le fait que** lesdits moyens de déphasage (15) comprennent des lignes à retard (15A, 15B).

**9.** Récepteur selon l'une des revendications 1 à 8, **caractérisé par le fait qu'**à la bobine (L1, L2 ou L3) de chaque antenne (3, 4, ou 13) est associé un condensateur (C1, C2 ou C3) qui forme avec ladite bobine un circuit résonant parallèle accordé sur la fréquence f du signal à recevoir.

**10.** Récepteur selon la revendication 9 rattachée à la revendication 8, **caractérisé par le fait qu'**un premier circuit résonant parallèle (L1, C1) formé avec la bobine (L1) d'une première (3) des trois antennes (3, 4, 13) a une première extrémité qui est reliée électriquement à une première borne de sortie (16) et une seconde extrémité qui est reliée électriquement à une première des deux extrémités d'un second circuit résonant parallèle (L2, C2) formé avec la bobine (L2) d'une seconde (4) des trois antennes, **par le fait que** la seconde extrémité du second circuit résonant parallèle (L2, C2) est reliée à travers une première ligne à retard (15A) à une première des deux extrémités d'un troisième circuit résonant parallèle (L3, C3) qui est formé avec la bobine (L3) de la troisième antenne (13) et dont la seconde extrémité est reliée à travers une seconde ligne à retard (15B) à une seconde borne de sortie (17), et **par le fait que** les première et seconde lignes à retard (15A et 15B) sont dimensionnées pour introduire respectivement un retard ($\Delta$t$_1$) de $\dfrac{1}{3f}$ et un retard ($\Delta$t$_2$) de $\dfrac{2}{3f}$, f étant la fréquence de signal à recevoir.

**11.** Récepteur selon l'une des revendications 4, 5, 6 ou 10, **caractérisé par le fait que** les première et seconde bornes de sortie (16 et 17) sont reliées électriquement aux entrées d'un amplificateur différentiel (18) dont la sortie (19) est reliée électriquement à ladite unité réceptrice (5).

**Claims**

**1.** Portable receiver comprising several antennas (3, 4) which are connected to a receiver unit (5) for receiving a signal transmitted by electromagnetic induction, said antennas being made in the form of coils (L1, L2) which are carried by a support (2) in such a way that the respective turns of said coils are oriented along different respective axes (9, 11) of a reference axis system associated with said support (2), as well as phase shifting means (15) placed between said antennas (3, 4) and said receiver unit (5), **characterized in that** said phase shifting means (15) are designed to produce, between the induced signals delivered by said antennas (3, 4) respectively, a temporal phase shift corresponding to an angle of (n-1)$\pi$/n at the frequency of the signal to be received, n being the number of antennas.

**2.** Receiver according to Claim 1, **characterized in that** it comprises two antennas (3, 4), the coils (L1, L2) of which have their respective turns oriented at 90° to each other, wherein a first (3) of the two antennas is connected to a first phase-shifter circuit (15<u>a</u>) which phase shifts the induced signal delivered by the first antenna (3) by +45°, while the second antenna (4) is connected to a second phase-shifter circuit (15<u>b</u>) which phase shifts the induced signal delivered by the second antenna by -45°.

3.  Receiver according to Claim 2, wherein the first phase-shifter circuit (15<u>a</u>) comprises a first capacitor (C12), a first plate of which is electrically connected to the output of the first antenna (3), and a first resistor (R1), the ends of which are electrically connected to a second plate of the first capacitor (C12) and to ground respectively, the junction between the second plate of the first capacitor (C12) and the corresponding end of the first resistor (R1) being connected to a first output terminal (16).

4.  Receiver according to Claim 3, **characterized in that** the second phase-shifter circuit (15<u>b</u>) comprises a second resistor (R2), a first end of which is electrically connected to the output of the second antenna (4), and a second capacitor (C22), the plates of which are electrically connected to a second end of the second resistor (R2) and to ground respectively, the junction between the second end of the second resistor (R2) and the corresponding plate of the second capacitor (C22) being connected to a second output terminal (17).

5.  Receiver according to Claim 1, **characterized in that** it comprises two antennas (3, 4), the coils (L1, L2) of which have their respective turns oriented at 90° to each other, wherein a first (3) of the two antennas is electrically connected directly to a first output terminal (16), while the second antenna (4) is connected to a second output terminal (17) via a phase-shifter circuit (15) which phase shifts the induced signal delivered by the second antenna (4) by 90°.

6.  Receiver according to Claim 5, **characterized in that** said phase-shifter circuit (15) is a delay line designed to introduce a delay ($\Delta t$) of 1/4f, f being the frequency of the signal to be received.

7.  Receiver according to Claim 1, **characterized in that** it comprises three antennas (3, 4, 13), the coils (L1, L2, L3) of which have their respective turns oriented in directions (9, 11, 14) which are perpendicular to one another in pairs, wherein said temporal phase shifting means (15) produce a phase shift of 120° between the three induced signals delivered by the three antennas (3, 4, 13) respectively.

8.  Receiver according to Claim 7, **characterized in that** said phase shifting means (15) comprise delay lines (15A, 15B).

9.  Receiver according to one of Claims 1 to 8, **characterized in that** the coil (L1, L2 or L3) of each antenna (3, 4, or 13) is associated with a capacitor (C1, C2 or C3) which forms with said coil a parallel resonant circuit tuned to the frequency f of the signal to be received.

10. Receiver according to Claim 9, as it depends on Claim 8, **characterized in that** a first parallel resonant circuit (L1, C1) formed with the coil (L1) of a first (3) of the three antennas (3, 4, 13) has a first end which is electrically connected to a first output terminal (16) and a second end which is electrically connected to a first of the two ends of a second parallel resonant circuit (L2, C2) formed with the coil (L2) of a second (4) of the three antennas, wherein the second end of the second parallel resonant circuit (L2, C2) is connected via a first delay line (15A) to a first of the two ends of a third parallel resonant circuit (L3, C3) which is formed with the coil (L3) of the third antenna (13) and the second end of which is connected via a second delay line (15B) to a second output terminal (17), and wherein the first and second delay lines (15A and 15B) are designed to introduce a delay ($\Delta t_1$) of 1/3f and a delay ($\Delta t_2$) of 2/3f respectively, f being the frequency of the signal to be received.

11. Receiver according to one of Claims 4, 5, 6 and 10, **characterized in that** the first and second output terminals (16 and 17) are electrically connected to the inputs of a differential amplifier (18), the output (19) of which is electrically connected to said receiver unit (5).

**Patentansprüche**

1.  Tragbarer Empfänger, der mehrere Antennen (3, 4), die mit einer Empfangseinheit (5) verbunden sind, um ein durch elektromagnetische Induktion übertragenes Signal zu empfangen, wobei die Antennen in Form von Spulen (L1, L2) ausgeführt sind, die von einem Träger (2) derart getragen werden, dass die Windungen der Spulen gemäß unterschiedlichen Achsen (9, 11) eines mit dem Träger (2) verbundenen Bezugsachsensystems ausgerichtet sind, sowie Phasenverschiebungseinrichtungen (15) enthält, die zwischen den Antennen (3, 4) und der Empfangseinheit (5) angeordnet sind, **dadurch gekennzeichnet, dass** die Phasenverschiebungseinrichtungen (15) eingerichtet sind, um zwischen den induzierten Signalen, die jeweils von den Antennen (3, 4) geliefert werden, eine zeitliche Phasenverschiebung zu erzeugen, die einem Winkel von $\dfrac{(n-1)\pi}{n}$ zur Frequenz des zu empfangenden Signals entspricht, wobei n die Anzahl der Antennen ist.

2. Empfänger nach Anspruch 1, **dadurch gekennzeichnet, dass** er zwei Antennen (3, 4) enthält, deren Spulen (L1, L2) ihre jeweiligen Windungen im 90°-Winkel zueinander ausgerichtet haben, und dass eine erste (3) der zwei Antennen mit einer ersten Phasenschieberschaltung (15a) verbunden ist, die das von der ersten Antenne (3) gelieferte, induzierte Signal um +45° phasenverschiebt, während die zweite Antenne (4) mit einer zweiten Phasenschieberschaltung (15b) verbunden ist, die das von der zweiten Antenne gelieferte, induzierte Signal um -45° phasenverschiebt.

3. Empfänger nach Anspruch 2, **dadurch gekennzeichnet, dass** die erste Phasenschieberschaltung (15a) einen ersten Kondensator (C12), von dem ein erster Belag elektrisch mit dem Ausgang der ersten Antenne (3) verbunden ist, und einen ersten Widerstand (R1) enthält, dessen Enden elektrisch mit einem zweiten Belag des ersten Kondensators (C12) bzw. mit Masse verbunden sind, wobei die Verbindung zwischen dem zweiten Belag des ersten Kondensators (C12) und dem entsprechenden Ende des ersten Widerstands (R1) mit einer ersten Ausgangsklemme (16) verbunden ist.

4. Empfänger nach Anspruch 3, **dadurch gekennzeichnet, dass** die zweite Phasenschieberschaltung (15b) einen zweiten Widerstand (R2), von dem ein erstes Ende elektrisch mit dem Ausgang der zweiten Antenne (4) verbunden ist, und einen zweiten Kondensator (C22) enthält, dessen Beläge elektrisch mit einem zweiten Ende des zweiten Widerstands (R2) bzw. mit Masse verbunden sind, wobei die Verbindung zwischen dem zweiten Ende des zweiten Widerstands (R2) und dem entsprechenden Belag des zweiten Kondensators (C22) mit einer zweiten Ausgangsklemme (17) verbunden ist.

5. Empfänger nach Anspruch 1, **dadurch gekennzeichnet, dass** er zwei Antennen (3, 4) enthält, deren Spulen (L1, L2) ihre Windungen im 90°-Winkel zueinander ausgerichtet haben, und dass eine erste (3) der zwei Antennen elektrisch direkt mit einer ersten Ausgangsklemme (16) verbunden ist, während die zweite Antenne (4) mit einer zweiten Ausgangsklemme (17) über eine Phasenschieberschaltung (15) verbunden ist, die das von der zweiten Antenne (4) gelieferte induzierte Signal um 90° phasenverschiebt.

6. Empfänger nach Anspruch 5, **dadurch gekennzeichnet, dass** die Phasenschieberschaltung (15) eine Verzögerungsleitung ist, die bemessen ist, um eine Verzögerung (Δt) von $\dfrac{1}{4f}$ einzuführen, wobei f die Frequenz des zu empfangenden Signals ist.

7. Empfänger nach Anspruch 1, **dadurch gekennzeichnet, dass** sie drei Antennen (3, 4, 13) enthält, deren Spulen (L1, L2, L3) ihre Windungen in Richtungen (9, 11, 14) ausgerichtet haben, die paarweise lotrecht zueinander sind, und dadurch, dass die zeitlichen Phasenverschiebungseinrichtungen (15) eine Phasenverschiebung von 120° zwischen den drei induzierten Signalen erzeugen, die von den drei Antennen (3, 4, 13) geliefert werden.

8. Empfänger nach Anspruch 7, **dadurch gekennzeichnet, dass** die Phasenverschiebungseinrichtungen (15) Verzögerungsleitungen (15A, 15B) enthalten.

9. Empfänger nach einem der Ansprüche 1 bis 8, **dadurch gekennzeichnet, dass** der Spule (L1, L2 oder L3) jeder Antenne (3, 4 oder 13) ein Kondensator (C1, C2 oder C3) zugeordnet ist, der mit der Spule eine Parallelresonanzschaltung formt, die auf die Frequenz f des zu empfangenden Signals abgestimmt ist.

10. Empfänger nach Anspruch 9 in Verbindung mit Anspruch 8, **dadurch gekennzeichnet, dass** eine erste Parallelresonanzschaltung (L1, C1), die mit der Spule (L1) einer ersten (3) der drei Antennen (3, 4, 13) geformt ist, ein erstes Ende hat, das elektrisch mit einer ersten Ausgangsklemme (16) verbunden ist, und ein zweites Ende hat, das elektrisch mit einem ersten der zwei Enden einer zweiten Parallelresonanzschaltung (L2, C2) verbunden ist, die mit der Spule (L2) einer zweiten (4) der drei Antennen geformt ist, dadurch, dass das zweite Ende der zweiten Parallelresonanzschaltung (L2, C2) über eine erste Verzögerungsleitung (15A) mit einem ersten der zwei Enden einer dritten Parallelresonanzschaltung (L3, C3) verbunden ist, die mit der Spule (L3) der dritten Antenne (13) geformt ist und deren zweites Ende über eine zweite Verzögerungsleitung (15B) mit einer zweiten Ausgangsklemme (17) verbunden ist, und dadurch, dass die erste und die zweite Verzögerungsleitung (15A und 15B) bemessen sind, um eine Verzögerung ($\Delta t_1$) von $\dfrac{1}{3f}$ bzw. eine Verzögerung ($\Delta t_2$) von $\dfrac{2}{3f}$ einzuführen, wobei f die Frequenz des zu empfangenden Signals ist.

11. Empfänger nach einem der Ansprüche 4, 5, 6 oder 10, **dadurch gekennzeichnet, dass** die ersten und zweiten Ausgangsklemmen (16 und 17) elektrisch mit den Eingängen eines Differentialverstärkers (18) verbunden sind, dessen Ausgang (19) elektrisch mit der Empfangseinheit (5) verbunden ist.

FIG.1

FIG.2

FIG.3

FIG.4

FIG.5

FIG.6

## RÉFÉRENCES CITÉES DANS LA DESCRIPTION

**Documents brevets cités dans la description**

- WO 1207244 A
- FR 2763186 A